# EUROPEAN PATENT APPLICATION

(11) **EP 4 693 711 A1**
(43) Date of publication of application: **11.02.2026**
(21) Application number: 23929713.8
(22) Date of filing: 30.06.2023
(51) Int. Cl.: H01M 50/569, H01M 50/543

(54) **BATTERY MODULE AND ELECTRIC DEVICE**

(30) Priority: 31.03.2023 CN 202310341085
(71) Applicant: Xiamen Ampack Technology Limited, Xiamen City, Fujian Province, 361000 (CN)
(72) Inventor: NONG, Wenbin, Xiamen, Fujian 361000 (CN); WANG, Pengfei, Xiamen, Fujian 361000 (CN); LI, Kunlong, Xiamen, Fujian 361000 (CN)
(74) Representative: Icosa
(86) International application number: PCT/CN2023/104988
(87) International publication number: WO 2024/198136

(57) **Abstract**

This application provides a battery module and an electric device. The battery module includes a plurality of cell units arranged along a first direction and a collection assembly. Each of the cell units includes a cell and a bracket, the cell including an electrode assembly, a cell housing, and an electrode terminal. The electrode terminal is connected to the electrode assembly and led out of the cell housing. The cell housing includes a body portion and a first sealing portion. The electrode assembly is disposed at the body portion. The first sealing portion includes a first connection portion, the electrode terminal extends out of the cell housing from the first connection portion. The bracket includes a first portion. The first portion covers a part of the first connection portion, the electrode terminal extends out of the first portion. The collection assembly includes a plurality of sampling members. At least two electrode terminals and one sampling member are laminated and connected. In this application, by laminating and connecting at least two electrode terminals and one sampling member, the risk of deformation of the electrode terminal and the sampling member in the laminated portion is reduced, which is conducive to better connection of the electrode terminal by the sampling member.

## Description

### TECHNICAL FIELD

This application relates to the field of energy storage technologies, and more particularly, to a battery module and an electric device.

### BACKGROUND

At present, battery modules are widely used in drones, electric vehicles, intelligent energy storage devices, and other fields. The battery module collects information of the battery module through a circuit board, with a complex assembly process, which increases costs and is not conducive to production. Under conditions such as cell swelling, cell vibration, and dropping, the electrode terminal may deform, affecting the use of the battery module.

### SUMMARY

In view of this, it is necessary to provide a battery module and an electric device, which can reduce process steps, save materials, and reduce the risk of deformation of the electrode terminal.

An embodiment of this application provides a battery module, where the battery module includes a plurality of cell units arranged along a first direction and a collection assembly. Each of the cell units includes a cell and a bracket, the cell including an electrode assembly, a cell housing, and an electrode terminal. The electrode terminal is connected to the electrode assembly and led out of the cell housing. The cell housing includes a body portion and a first sealing portion. The electrode assembly is disposed in the body portion. The first sealing portion includes a first connection portion, and the electrode terminal extends out of the cell housing from the first connection portion. The bracket includes a first portion. The first portion covers a part of the first connection portion, and the electrode terminal extends out of the first portion. The collection assembly includes a plurality of sampling members. At least two electrode terminals and one sampling member are laminated and connected.

In this application, by connecting the electrode terminal through the sampling member for sampling, the process steps can be reduced, and materials can be saved. By covering the first connection portion with the first portion, the toughness of the first connection portion is enhanced, which is conducive to better connection of the electrode terminal by the sampling member. By laminating and connecting at least two electrode terminals and one sampling member, the risk of deformation of the electrode terminal and the sampling member in the laminated portion is reduced, which is conducive to better connection of the electrode terminal by the sampling member.

Optionally, in some embodiments of this application, the collection assembly includes a wire. The wire connects each of the sampling members, facilitating the sampling member to collect electrical signal information of the cell.

Optionally, in some embodiments of this application, the one sampling member is welded to or crimped to at least one of at least two electrode terminals.

Optionally, in some embodiments of this application, electrode terminals of two adjacent cells extending out of the first portion are laminated and connected to form a laminated region. The body portion and the first portion are arranged along a second direction. Along the second direction, a projection of the sampling member is located within a projection of the laminated region. The second direction is perpendicular to the first direction. Along the second direction, thicknesses of the sampling member and the laminated region increase. When the electrode terminal deforms, a force of deformation can be alleviated, and a part of the laminated region not connected to the sampling member deforms before the sampling member, thereby protecting the sampling member and reducing the risk of deformation of the sampling member and/or detachment of the sampling member from the laminated region.

Optionally, in some embodiments of this application, along the second direction, the sampling member is closer to the cell housing than the sampling member from the laminated region.

Optionally, in some embodiments of this application, a part of the electrode terminal extending out of the first portion includes a first section and a second section. The first sections of the electrode terminals of adjacent cells are spaced apart along the first direction. The second sections of the electrode terminals of adjacent cells are laminated along the second direction. Along the second direction, a length H of the first section extends out of the first portion meets 2 mm ≤ H ≤ 20 mm. This facilitates deformation of the electrode terminal in the first direction, the second direction, and a third direction when two adjacent cells undergo relative displacement, which is conducive to reducing the pulling force on the laminated region and the sampling member and reducing the risk of deformation of the laminated region and the sampling member.

Optionally, in some embodiments of this application, H meets 3 mm ≤ H ≤ 15 mm, further facilitating deformation of the electrode terminal in the first direction, the second direction, and the third direction, and further conducive to reducing the pulling force on the electrode terminal.

Optionally, in some embodiments of this application, the first sealing portion includes a first bent portion and a second bent portion. The first bent portion is connected to the second bent portion through the first connection portion. The bracket includes a first side portion covering the first bent portion and a second side portion covering the second bent portion. The first side portion and the second side portion are arranged along a third direction. The first direction, the second direction, and the third direction are perpendicular to each other, providing protection for the first sealing portion.

Optionally, in some embodiments of this application, when viewed along the first direction, in the second direction, a part of the first connection portion is located between the body portion and the first portion, and in the third direction, a part of the first connection portion is located between the first side portion and the second side portion, which can provide swelling space for the first sealing portion, facilitate pressure relief, reduce the impact of the pressure inside the cell on the first connection portion, reduce the impact on the sealing performance of the first sealing portion, and facilitate heat dissipation of the first sealing portion.

Optionally, in some embodiments of this application, there is pressure between adjacent cell housings, improving the performance of the cell.

Optionally, in some embodiments of this application, the body portions of adjacent cells are in direct contact, and adjacent cells apply pressure to each other through the body portions, which can reduce the force on the first sealing portion, enhance the protection to the first sealing portion, reduce the need for buffer members between adjacent cells to provide swelling space for the cell, reduce the occupied space, and thus increase the energy density of the battery module.

Optionally, in some embodiments of this application, the cell housing includes a first wall, a second wall, a third wall, and a fourth wall. The second wall is opposite to the first wall along a second direction. Along the first direction, the third wall is opposite to the fourth wall. When viewed in a direction opposite to the second direction, in the first direction, the first portion does not exceed the third wall, and the first portion does not exceed the fourth wall. When the body portions of adjacent cells apply pressure to each other, the force on the first sealing portion can be reduced, enhancing the protection of the first sealing portion.

Optionally, in some embodiments of this application, the electrode assembly is a wound structure, and the wound structure includes a first straight section, a second straight section, a first curved section, and a second curved section. The first straight section connects the first curved section and the second curved section. The second straight section connects the first curved section and the second curved section. Along the first direction, a projection of the third wall covers a projection of the first straight section, and a projection of the fourth wall covers a projection of the second straight section, facilitating pressure relief.

Optionally, in some embodiments of this application, the bracket is integrally formed on the cell, which can enhance the connection strength between the bracket and the cell.

Optionally, in some embodiments of this application, the bracket is an insulating bracket, which can reduce the risk of a short circuit between the bracket and the cell.

Optionally, in some embodiments of this application, the first portion is disposed around at least a part of the electrode terminal, enhancing the protection of the electrode terminal and facilitating the strengthening of the strength of the electrode terminal.

Optionally, in some embodiments of this application, the sampling member is configured to displace with the deformation of the electrode terminal, and a part of the wire is configured to move with the sampling member, reducing the risk of detachment of the sampling member from the electrode terminal or disconnection of the sampling member from the wire caused by the sampling member being pulled by the wire.

Optionally, in some embodiments of this application, when viewed in a direction opposite to the second direction, in the first direction, the first side portion is located between the third wall and the fourth wall. When the body portions of adjacent cells apply pressure to each other, the force on the first sealing portion can be reduced, enhancing the protection of the first sealing portion.

Optionally, in some embodiments of this application, when viewed in a direction opposite to the second direction, in the first direction, the second side portion is located between the third wall and the fourth wall. When the body portions of adjacent cells apply pressure to each other, the force on the first sealing portion can be reduced, enhancing the protection of the first sealing portion.

Optionally, in some embodiments of this application, along the second direction, a projection of the first side portion overlaps with a projection of the first curved section, the projection of the first side portion and a projection of the first straight section are spaced apart from each other, and the projection of the first side portion and a projection of the second straight section are spaced apart from each other, facilitating pressure relief.

Optionally, in some embodiments of this application, along the second direction, a projection of the second side portion overlaps with a projection of the second curved section, the projection of the second side portion and a projection of the first straight section are spaced apart from each other, and the projection of the second side portion and a projection of the second straight section are spaced apart from each other, facilitating pressure relief.

Optionally, in some embodiments of this application, the bracket includes a first extension portion, and the first extension portion extends from the first side portion. The first extension portion can protect a fifth wall and a second sealing portion, enhancing the connection strength between the bracket and the cell.

Optionally, in some embodiments of this application, the bracket includes a second extension portion, and the second extension portion extends from the second side portion. The second extension portion can protect a sixth wall and another second sealing portion, enhancing the connection strength between the bracket and the cell, and facilitating the integral formation of the bracket on the cell.

Optionally, in some embodiments of this application, when viewed along a direction opposite to the second direction, in the first direction, the first side portion does not exceed the first extension portion, and a first gap is formed between adjacent first side portions. When adjacent body portions are in direct contact and apply pressure to each other, the force on the first side portion can be reduced, thereby reducing the force on the first sealing portion, which is conducive to protecting the first sealing portion. The first gap also facilitates heat dissipation of the cell.

Optionally, in some embodiments of this application, when viewed along a direction opposite to the second direction, in the first direction, the second side portion does not exceed the second extension portion, and a second gap is formed between adjacent second side portions. When adjacent body portions are in direct contact and apply pressure to each other, the second gap can reduce the force on the second side portion, thereby further reducing the force on the first sealing portion, further facilitating the protection of the first sealing portion. The second gap also facilitates heat dissipation of the cell.

Optionally, in some embodiments of this application, the battery module further includes an elastic member, the elastic member including a base portion, a third bent portion, and a fourth bent portion. The third bent portion is connected to the fourth bent portion through the base portion. The base portion is configured to provide pressure to a cell unit, and the third bent portion and the fourth bent portion are configured to provide swelling space for the cell unit, which can buffer the pressure applied to the cell unit, reduce the impact on the service life of the battery module, and by continuously applying pressure to the cell unit through the base portion, the cell unit is in a pressurized state and maintains dynamic balance, which is conducive to improving the service life of the battery module.

Optionally, in some embodiments of this application, the elastic member includes a first connection section. The first connection section connects a side of the third bent portion away from the base portion. The first connection section is fixed to the casing which can transfer the force received by the third bent portion to the casing.

Optionally, in some embodiments of this application, the first connection section is parallel to the base portion, which is conducive to deformation of the elastic member in the first direction.

Optionally, in some embodiments of this application, the third bent portion includes a first bent section and a second bent section. The first bent section is connected to the base portion and the second bent section. The second bent section is connected to the first connection section.

Optionally, in some embodiments of this application, a first included angle A₁ is formed between the first bent section and the base portion, and a second included angle B₁ is formed between the second bent section and the first connection section, where A₁ ≥ B₁. This is conducive to enhancing the deformation resistance of the first bent section and reducing the risk of deformation of the elastic member in the first direction.

Optionally, in some embodiments of this application, a third included angle C₁ is formed between the first bent section and the second bent section, where C₁ > A₁, which is conducive to improving uniform deformation of the third bent portion.

Optionally, in some embodiments of this application, C₁ = 2A₁ = 2B₁, which is conducive to further improving uniform deformation of the third bent portion.

Optionally, in some embodiments of this application, the casing includes a first sidewall. The first sidewall is provided with a first fixed portion. Along the first direction, a projection of the first connection section overlaps with a projection of the first fixed portion. The first connection section is fixed to the first fixed portion, which can transfer the force received by the bent portion to the first sidewall.

Optionally, in some embodiments of this application, a structural strength of the first sidewall is greater than a structural strength of the elastic member, reducing the risk of deformation of the first sidewall due to the force received by the third bent portion.

Optionally, in some embodiments of this application, the elastic member includes a second connection section. The second connection section connects a side of the fourth bent portion away from the base portion. The second connection section is fixed to the casing, which can transfer the force received by the fourth bent portion to the casing.

Optionally, in some embodiments of this application, the second connection section is parallel to the base portion, which is conducive to deformation of the elastic member in the first direction.

Optionally, in some embodiments of this application, the housing includes a bottom wall. The bottom wall is provided with a third fixed portion. Along the first direction, a projection of the second connection section overlaps with a projection of the third fixed portion. The second connection section is fixed to the third fixed portion, which can transfer the force received by the bent portion to the bottom wall.

Optionally, in some embodiments of this application, a structural strength of the bottom wall is greater than the structural strength of the elastic member, reducing the risk of deformation of the bottom wall due to the force received by the fourth bent portion.

Optionally, in some embodiments of this application, the third bent portion and the fourth bent portion have the same structure, which is conducive to uniform force application and uniform deformation.

An embodiment of this application further provides an electric device, where the electric device includes the battery module according to any one of the foregoing embodiments.

### BRIEF DESCRIPTION OF DRAWINGS

FIG. 1 is a schematic diagram of a structure of a battery module according to some embodiments.
FIG. 2 is a schematic exploded view of a battery module according to some embodiments.
FIG. 3 is a schematic diagram of a partial structure of a battery module according to some embodiments.
FIG. 4 is a schematic diagram of a partial structure of a battery module from another perspective according to some embodiments.
FIG. 5 is a schematic diagram of a structure of a plurality of cell units according to some embodiments.
FIG. 6 is a schematic diagram of a structure of a cell according to some embodiments.
FIG. 7 is a schematic diagram of a structure of a cell viewed along a direction Y' opposite to a second direction Y according to some embodiments.
FIG. 8 is a schematic exploded view of a cell according to some embodiments.
FIG. 9 is a schematic diagram of a structure of a cell according to some other embodiments.
FIG. 10 is a schematic diagram of a structure of a cell according to still some other embodiments.
FIG. 11 is a schematic diagram of a structure of an electrode assembly according to some embodiments.
FIG. 12 is a schematic diagram of a structure of a cell and bracket according to some embodiments.
FIG. 13 is a schematic diagram of a structure of a cell and bracket from another perspective according to some embodiments.

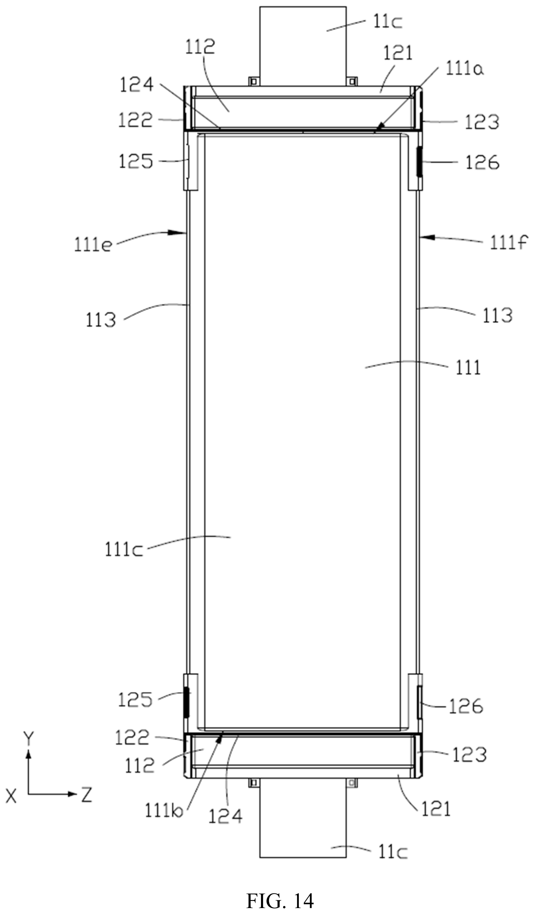

FIG. 14 is a schematic diagram of a structure of a cell and bracket from another perspective according to some embodiments.

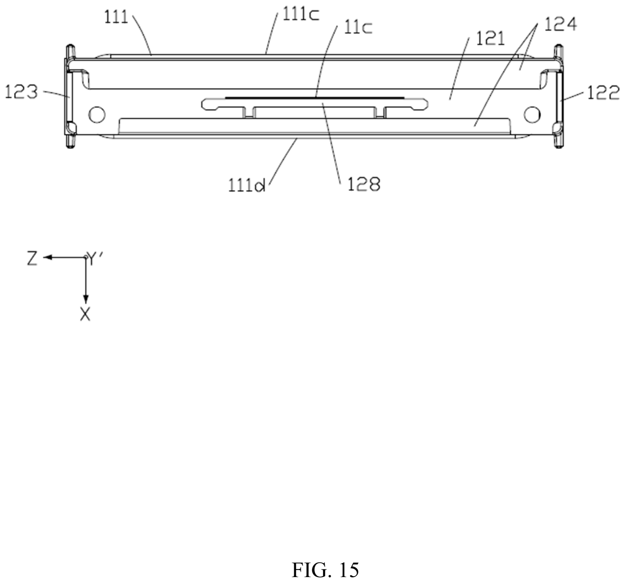

FIG. 15 is a schematic diagram of a structure of a cell and a bracket viewed in a direction Y' opposite to a second direction Y according to some embodiments.

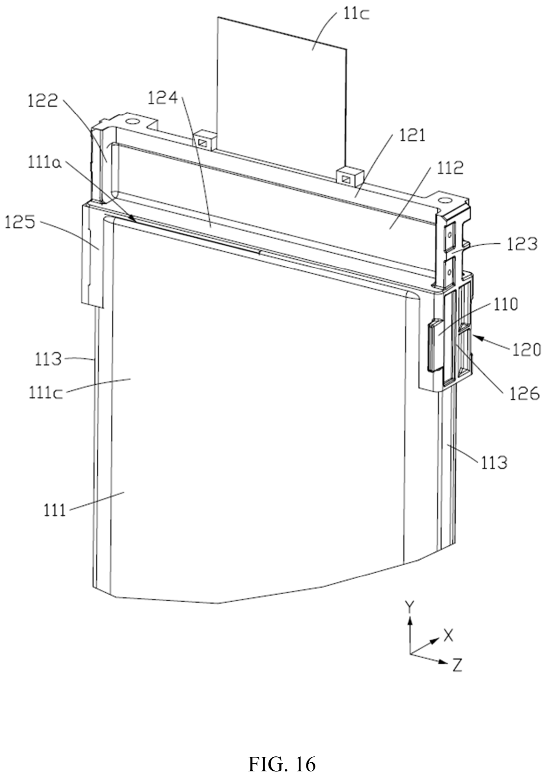

FIG. 16 is a schematic diagram of a partial structure of a cell and bracket in FIG. 12.

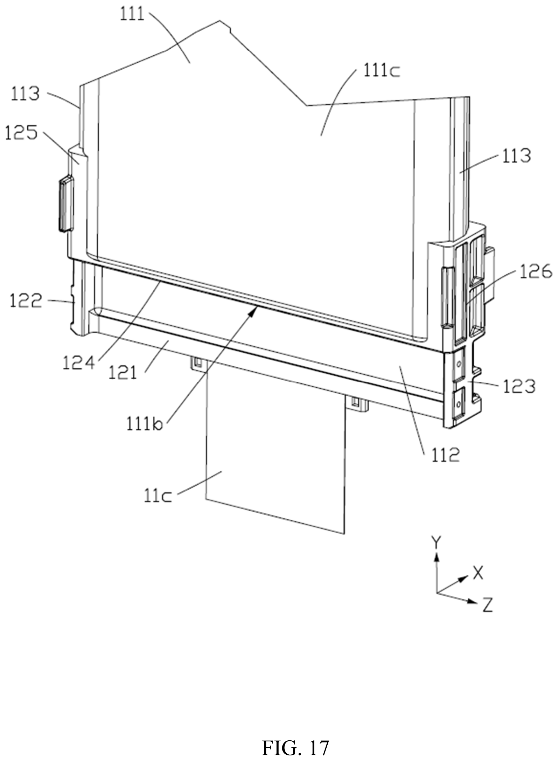

FIG. 17 is a schematic diagram of another partial structure of a cell and bracket in FIG. 12.
FIG. 18 is a schematic diagram of a structure of laminated connection of electrode terminals of two cells according to some embodiments.
FIG. 19 is a schematic diagram of a structure of displacement of two cells in FIG. 18 along a first direction X.
FIG. 20 is a schematic diagram of a structure of displacement of two cells in FIG. 18 along a second direction Y.
FIG. 21 is a schematic diagram of a partial enlarged structure in FIG. 20.
FIG. 22 is a schematic diagram of a structure of an elastic member according to some embodiments.
FIG. 23 is a schematic diagram of a partial structure of a casing according to some embodiments.
FIG. 24 is a schematic diagram of a structure of an electric device according to some embodiments.

**Description of reference signs:**

| | |
|---|---|
| Battery module | 100 |
| Cell unit | 10 |
| Cell | 11 |
| Cell housing | 11a |
| Body portion | 111 |
| First wall | 111a |
| Second wall | 111b |
| Third wall | 111c |
| Fourth wall | 111d |
| Fifth wall | 111e |
| Sixth wall | 111f |
| First housing | 1111 |
| First recess | 1111a |
| Second housing | 1112 |
| Second recess | 1112a |
| First extension side | 1113 |
| Second extension side | 1114 |
| First sealing portion | 112 |
| First connection portion | 112a |
| First bent portion | 112b |
| Second bent portion | 112c |
| Second sealing portion | 113 |
| Electrode assembly | 11b |
| First straight section | 1116 |
| Second straight section | 1117 |
| First curved section | 1118 |
| Second curved section | 1119 |
| Electrode terminal | 11c |
| Laminated region | 101 |
| First section | 102 |
| Second section | 103 |
| Bracket | 12 |
| First portion | 121 |
| First side portion | 122 |
| First gap | 122a |
| Second side portion | 123 |
| Second gap | 123a |
| Second connection portion | 124 |
| First extension portion | 125 |
| Second extension portion | 126 |
| Third connection portion | 128 |
| First protrusion | 110 |
| Third recess | 120 |
| Second protrusion | 130 |
| Fourth recess | 140 |
| Collection assembly | 20 |
| Sampling member | 21 |
| Wire | 22 |
| Circuit board | 30 |
| Casing | 40 |
| Rear wall | 41 |
| Front wall | 42 |
| First sidewall | 43 |
| First fixed portion | 431 |
| Second sidewall | 44 |
| Second fixed portion | 441 |
| Top wall | 45 |
| Third limiting portion | 451 |
| Fourth limiting portion | 452 |
| Bottom wall | 46 |
| Third fixed portion | 46a |
| First limiting portion | 461 |
| Second limiting portion | 462 |
| Elastic member | 50 |
| Base portion | 51 |
| Third bent portion | 52 |
| First bent section | 521 |
| Second bent section | 522 |
| Fourth bent portion | 53 |
| Third bent section | 531 |
| Fourth bent section | 532 |
| Electric device | 200 |
| First direction | X |
| Second direction | Y |
| Third direction | Z |

Some following specific embodiments will further illustrate this application in conjunction with the above drawings.

### DESCRIPTION OF EMBODIMENTS

Some following specific embodiments are exemplary and not restrictive, aiming to provide a basic understanding of this application but not to confirm critical or decisive elements of this application and not to limit the scope of protection. As long as there is no structural conflict, the various technical features mentioned in various embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It should be understood that the terms "perpendicular" and "equal to" are used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

In a first direction X, a first direction X and a direction opposite to the first direction X are present. In a second direction Y, a second direction Y and a direction opposite to the second direction Y are present. In a third direction Z, a third direction Z and a direction opposite to the third direction Z are present.

For convenience of description, the electrode terminal 11c in some drawings is not bent.

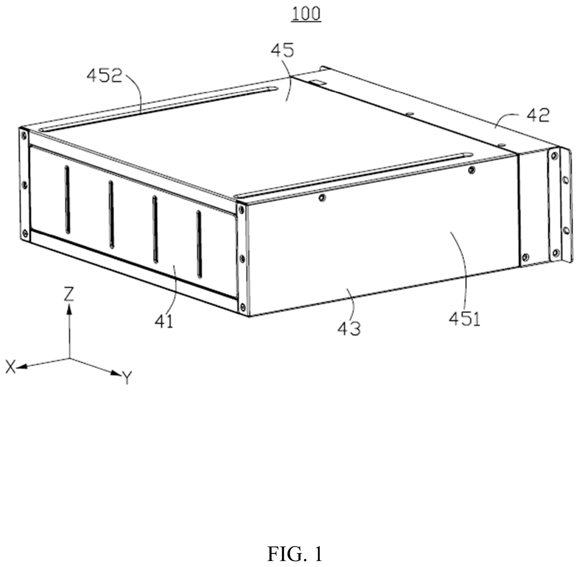

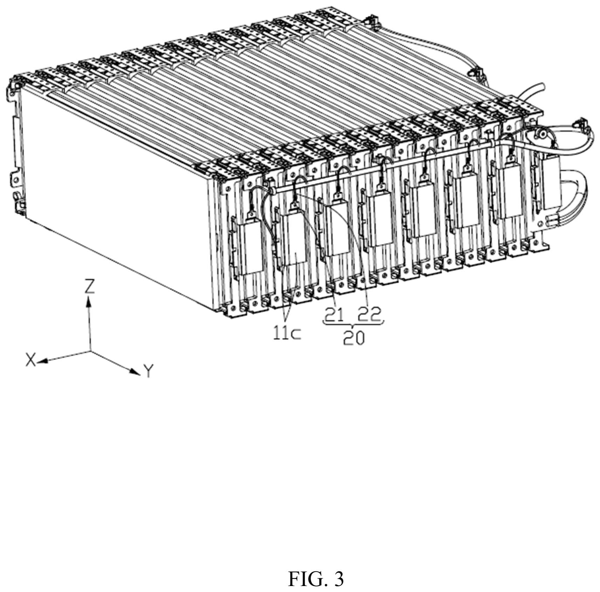

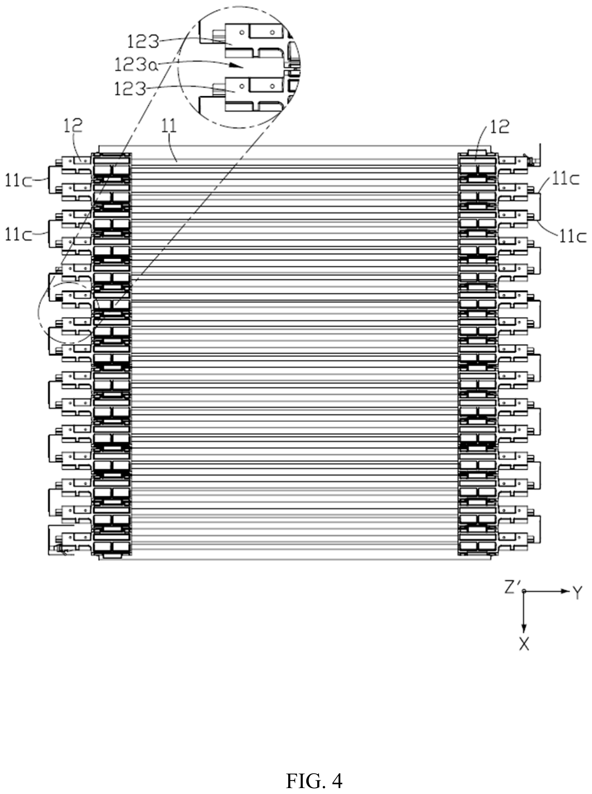

Referring to FIG. 1 to FIG. 6 and FIG. 18, an embodiment of this application provides a battery module 100. The battery module includes a plurality of cell units 10 and a collection assembly 20. The plurality of cell units 10 are arranged along a first direction X, each of the cell units 10 including a cell 11 and a bracket 12, and the bracket 12 is connected to the cell 11. The cell 11 includes a cell housing 11a, an electrode assembly 11b, and an electrode terminal 11c, the electrode terminal 11c is connected to the electrode assembly 11b and led out of the cell housing 11a.

The cell housing 11a includes a body portion 111 and a first sealing portion 112, and the electrode assembly 11b is disposed at the body portion 111. The first sealing portion 112 includes a first connection portion 112a, and the electrode terminal 11c extends out of the cell housing 11a from the first connection portion 112a. The bracket 12 includes a first portion 121, the first portion 121 covering a part of the first connection portion 112a, and the electrode terminal 11c extending out of the first portion 121.

The collection assembly 20 includes a plurality of sampling members 21. At least two electrode terminals 11c and one sampling member 21 are laminated and connected.

In this application, by connecting the electrode terminal 11c through the sampling member 21 for sampling, the process steps can be reduced, and materials can be saved. By covering the first connection portion 112a with the first portion 121, the toughness of the first connection portion 112a is enhanced. By laminating and connecting at least two electrode terminals 11c and one sampling member 21, the risk of deformation of the electrode terminal 11c and the sampling member 21 in the laminated portion is reduced, which is conducive to better connection of the electrode terminal 11c by the sampling member 21.

In some embodiments, the electrode terminals 11c of two adjacent cells 11 are laminated and connected to each other, and the sampling member 21 is connected to any one of the interconnected electrode terminals 11c.

In some embodiments, the electrode terminals 11c of three cells 11 are laminated and connected to each other, and the sampling member 21 is connected to any one of the interconnected electrode terminals 11c.

In some embodiments, the sampling member 21 can collect electrical signal information of the cell 11, the electrical signal information including but not limited to voltage, current, and temperature.

In some embodiments, the collection assembly 20 includes a wire 22, the wire 22 connecting each of the sampling members 21.

In some embodiments, the sampling member 21 is configured to displace with the deformation of the electrode terminal 11c, and a part of the wire 22 is configured to provide displacement space for the sampling member 21. When the electrode terminal 11c deforms, it drives the sampling member 21 to move together, and a part of the wire 22 moves with the sampling member 21, reducing the risk of detachment of the sampling member 21 from the electrode terminal 11c or disconnection of the sampling member 21 from the wire 22 caused by the sampling member 21 is pulled by the wire 22.

In some embodiments, the sampling member 21 is welded to or crimped to at least one of the at least two electrode terminals 11c. For example, the sampling member 21 is laser welded to at least any one of the interconnected electrode terminals 11c.

In some embodiments, the body portion 111 and the first portion 121 are arranged along a second direction Y, the first direction X being perpendicular to the second direction Y.

In some embodiments, the electrode terminals 11c of two adjacent cells 11 are laminated and connected along the second direction Y.

In some embodiments, the electrode terminals 11c of N cells 11 are laminated and connected along the second direction Y, where N ≥ 3.

In some embodiments, the sampling member 21 is fixed to the first portion 121 and connected to the electrode terminal 11c. Optionally, the first portion 121 is provided with a recess (not shown in the figures), and the sampling member 21 is connected to the recess.

In some embodiments, along the second direction Y, projections of the electrode terminals 11c of two adjacent cells 11 overlap. The electrode terminals 11c of two adjacent cells 11 are bent and then laminated and connected to form a laminated region 101. The electrode terminals 11c of two adjacent cells 11 are connected by welding, for example, laser welding, after being bent.

In some embodiments, the electrode terminal 11c and the sampling member 21 are first laminated in sequence, a part of the laminated region 101 not laminated with the sampling member 21 is welded first, and then a part of the laminated region 101 laminated with the sampling member 21 is welded, where the laser welding energy of the second welding part is greater than that of the first welding part.

In some embodiments, the electrode terminal 11c and the sampling member 21 are first laminated in sequence, a part of the laminated region 101 laminated with the sampling member 21 is welded first, and then a part of the laminated region 101 not laminated with the sampling member 21 is welded, where the laser welding energy of the second welding part is less than that of the first welding part.

In some embodiments, along the second direction Y, a projection of the sampling member 21 is located within a projection of the laminated region 101. Along the second direction Y, thicknesses of the sampling member 21 and the laminated region 101 increase. When the electrode terminal 11c deforms, a force of deformation can be alleviated, and the part of the laminated region 101 not connected to the sampling member 21 deforms before the sampling member 21, thereby protecting the sampling member 21 and reducing the risk of deformation of the sampling member 21 and/or detachment from the laminated region 101.

In some embodiments, along the second direction Y, the sampling member 21 is closer to the cell housing 11a than the laminated region 101.

In some embodiments, a part of the laminated region 101 and the sampling member 21 are arranged along the second direction Y. In some embodiments, along the second direction Y, the sampling member 21 is disposed between two laminated and connected electrode terminals 11c.

In some embodiments, in the first direction X, the interconnected electrode terminals 11c and the sampling member 21 are laminated. Optionally, the sampling member 21 is located between the electrode terminals 11c. Optionally, the sampling member 21 is located at the leftmost side of the lamination. Optionally, the sampling member 21 is located at the rightmost side of the lamination.

In some embodiments, the bracket 12 is integrally formed on the cell 11, which can enhance the connection strength between the bracket 12 and the cell 11. Optionally, the bracket 12 is integrally formed with the cell 11 through low-pressure injection molding.

In some embodiments, an outer surface of the body portion 111 may have some insulating members to better protect the body portion, such as an insulating film.

In some embodiments, the bracket 12 is an insulating bracket, which can reduce the risk of a short circuit between the bracket 12 and the cell 11.

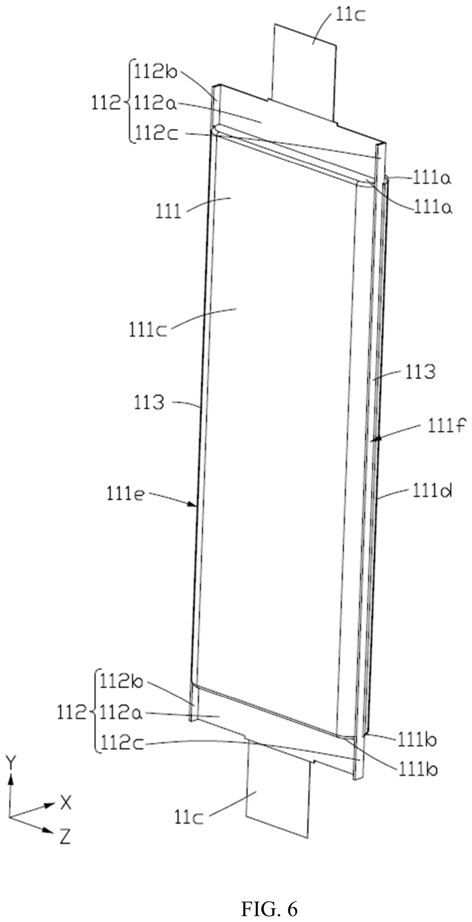

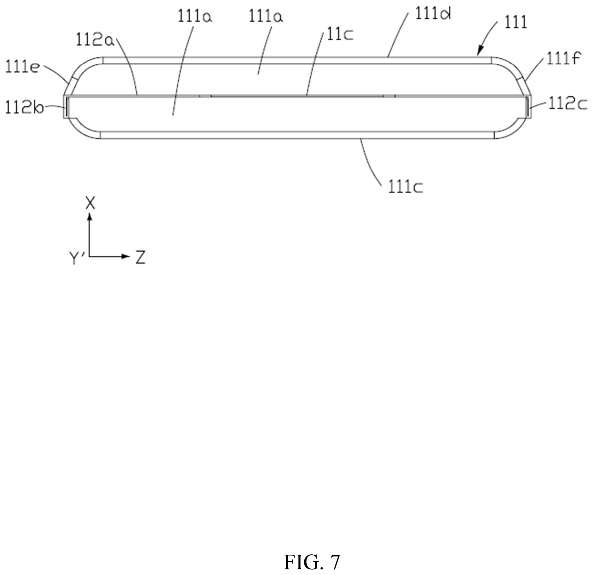

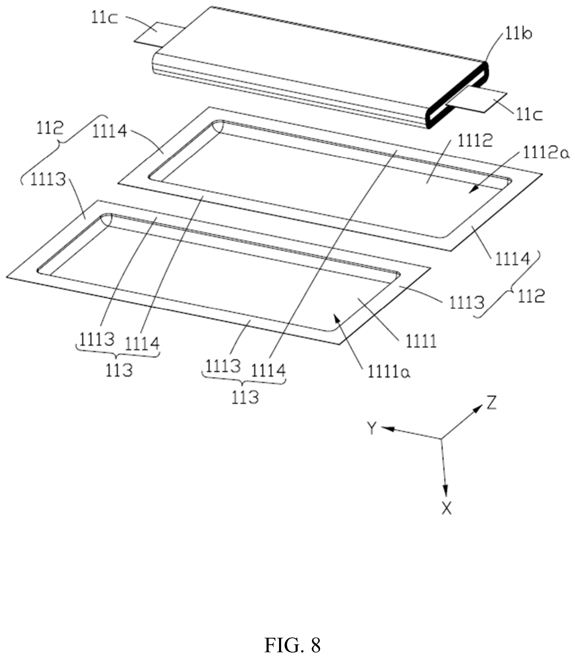

Referring to FIG. 6 to FIG. 10, in some embodiments, the body portion 111 is provided with an accommodation space, and the body portion 111 includes a first housing 1111 and a second housing 1112, the first housing 1111is provided with a first recess 1111a, and the second housing 1112is provided with a second recess 1112a. The first housing 1111 is connected to the second housing 1112 to form the accommodation space. A part of the electrode assembly 11b is disposed in the first recess 1111a, and another part of the electrode assembly 11b is disposed in the second recess 1112a. A peripheral side of the first housing 1111 extends outward to form a first extension side 1113, a peripheral side of the second housing 1112 extends outward to form a second extension side 1114, and after the first housing 1111 is connected to the second housing 1112, the first extension side 1113 and the second extension side 1114 overlap and are sealed and connected.

In some embodiments, the first extension side 1113 and the second extension side 1114 overlap and are sealed and connected to form two first sealing portions 112 and two second sealing portions 113. The two first sealing portions 112 are disposed along a second direction Y. The two second sealing portions 113 are disposed along a third direction Z. One first sealing portion 112 connects the two second sealing portions 113, and the other first sealing portion 112 connects the two second sealing portions 113.

In some embodiments, the body portion 111 includes a first wall 111a, a second wall 111b, a third wall 111c, and a fourth wall 111d. Along the second direction Y, the second wall 111b is opposite to the first wall 111a. Along the first direction X, the third wall 111c is opposite to the fourth wall 111d. One first sealing portion 112 is connected to the first wall 111a, and the other first sealing portion 112 is connected to the second wall 111b.

The body portion 111 includes a fifth wall 111e and a sixth wall 111f, the fifth wall 111e and the sixth wall 111f is opposite to each other along the third direction Z, one of the two second sealing portions 113 is connected to the fifth wall 111e, and the other of the two second sealing portions 113 is connected to the sixth wall 111f.

In some embodiments, the cell 11 includes two electrode terminals 11c, where one of the electrode terminals 11c extends out of the cell housing 11a from one of the first sealing portions 112, and the other electrode terminal 11c extends out of the cell housing 11a from the other first sealing portion 112.

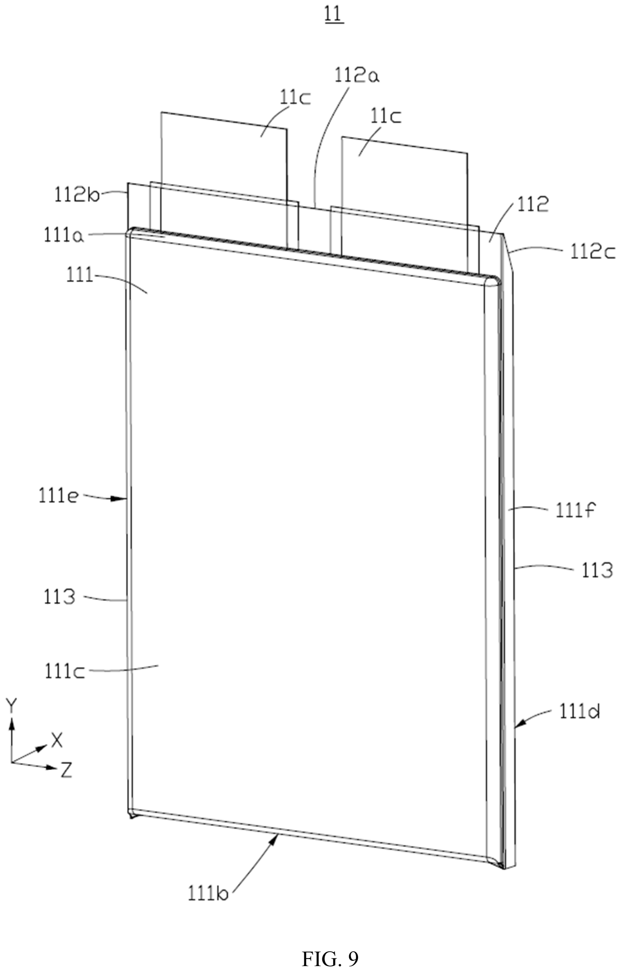

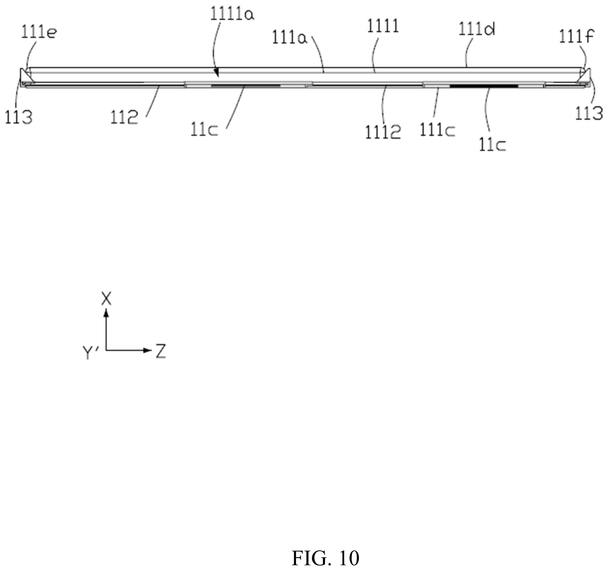

Referring to FIG. 9 and FIG. 10, in some embodiments, the cell 11 includes two electrode terminals 11c and one first sealing portion 112, the two electrode terminals 11c extending out of the cell housing 11a from the first sealing portion 112.

In some embodiments, the cell 11 includes two electrode terminals 11c and two first sealing portions 112, the two electrode terminals 11c extending out of the cell housing 11a from the same first sealing portion 112.

Referring to FIG. 6 to FIG. 8, in some embodiments, the body portion 111 includes two first walls 111a, two second walls 111b, and two first sealing portions 112. One of the first walls 111a connects the third wall 111c and one of the first sealing portions 112, and the other first wall 111a connects the fourth wall 111d and the other first sealing portion 112. One of the second walls 111b connects the third wall 111c and the other first sealing portion 112, and the other second wall 111b connects the fourth wall 111d and the other first sealing portion 112. One of the electrode terminals 11c extends out of the cell housing 11a from one of the first sealing portions 112, and the other electrode terminal 11c extends out of the cell housing 11a from the other first sealing portion 112.

When viewed along a direction Y' opposite to the second direction Y, in the first direction X, the two first walls 111a are located on opposite sides of the first sealing portion 112. When viewed along the second direction Y, in the first direction X, the two second walls 111b are located on opposite sides of the other first sealing portion 112.

In some embodiments, the body portion 111 includes one first wall 111a, one second wall 111b, and two first sealing portions 112, the first wall 111a connecting the third wall 111c and one first sealing portion 112, and the second wall 111b connecting the third wall 111c and another first sealing portion 112. The body portion 111 is provided with an accommodation space, and the body portion 111 includes a first housing 1111 and a second housing 1112, the first housing 1111 is provided with a first recess 1111a, and the second housing 1112 is flat. The first housing 1111 is connected to the second housing 1112 to form the accommodation space. The electrode assembly 11b is disposed in the first recess 1111a. One of the electrode terminals 11c extends out of the cell housing 11a from one of the first sealing portions 112, and the other electrode terminal 11c extends out of the cell housing 11a from the other first sealing portion 112.

In some embodiments, the body portion 111 includes two first walls 111a, one second wall 111b, and one first sealing portion 112. The body portion 111 is provided with an accommodation space, and the body portion 111 includes a first housing 1111 and a second housing 1112, the first housing 1111 is connected to the second housing 1112, the first housing 1111is provided with a first recess 1111a, and the second housing 1112is provided with a second recess 1112a, forming the accommodation space. The electrode assembly 11b is disposed in the first recess 1111a and the second recess 1112a. Two electrode terminals 11c extend out of the cell housing 11a from the same first sealing portion 112.

Optionally, the second wall 111b has one, and the first sealing portion 112 has one, where one of the first walls 111a connects the third wall 111c and the first sealing portion 112, and the other first wall 111a connects the fourth wall 111d and the first sealing portion 112. When viewed along a direction Y' opposite to the second direction Y, in the first direction X, the two first walls 111a are located on opposite sides of the first sealing portion 112.

Optionally, the second wall 111b has two, and the first sealing portion 112 has two, where one of the first walls 111a connects the third wall 111c and one of the first sealing portions 112, and the other first wall 111a connects the fourth wall 111d and the one first sealing portion 112. When viewed along a direction Y' opposite to the second direction Y, in the first direction X, the two first walls 111a are connectedlocated on opposite sides of the first sealing portion 112. One of the second walls 111b connects the third wall 111c and the other first sealing portion 112, and the other second wall 111b connects the fourth wall 111d and the other first sealing portion 112. Along the second direction Y, in the first direction X, the two second walls 111b are located on opposite sides of the first sealing portion 112.

Referring to FIG. 10, in some embodiments, the body portion 111 includes one first wall 111a, one second wall 111b, and one first sealing portion 112. The body portion 111 is provided with an accommodation space, and the body portion 111 includes a first housing 1111 and a second housing 1112, the first housing 1111is provided with a first recess 1111a, and the second housing 1112 is flat. The first housing 1111 is connected to the second housing 1112 to form the accommodation space. The electrode assembly 11b is disposed in the first recess 1111a. The two electrode terminals 11c extend out of the cell housing 11a from the same first sealing portion 112.

Optionally, the first sealing portion 112 has one, the first wall 111a connects the third wall 111c and the first sealing portion 112, and the second wall 111b is connected to the third wall 111c.

Optionally, the first sealing portion 112 has two. The first wall 111a connects the third wall 111c and one of the first sealing portions 112, and the second wall 111b connects the third wall 111c and the other first sealing portion 112.

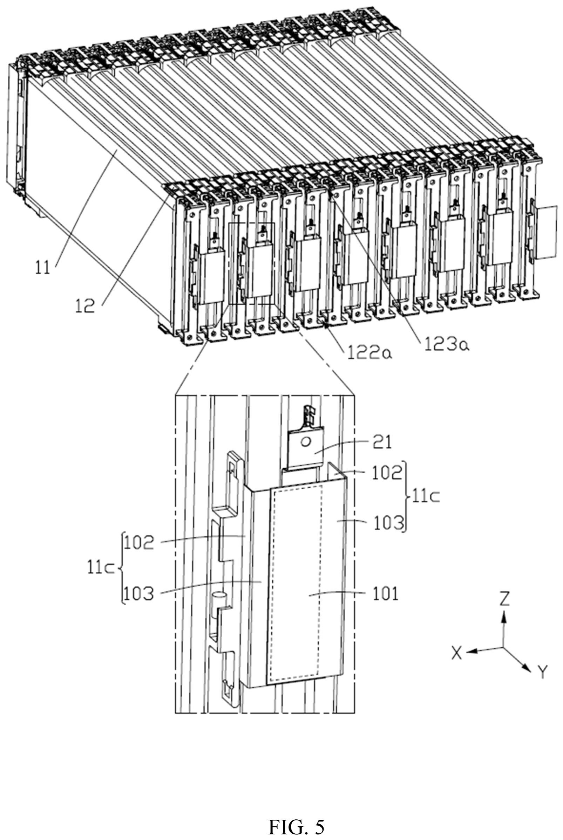

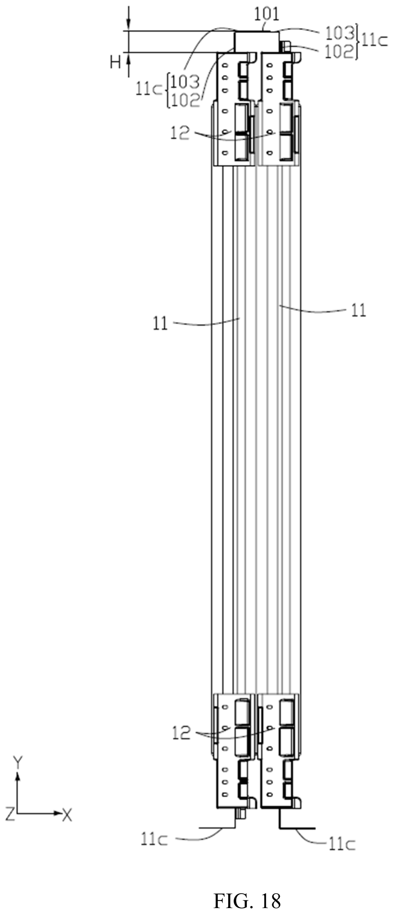

Referring to FIG. 5 and FIG. 18, in some embodiments, a part of the electrode terminal 11c extending out of the first portion 121 includes a first section 102 and a second section 103, the first sections 102 of the electrode terminals 11c of adjacent cells 11 is spaced apart along the first direction X, and the second sections 103 of the electrode terminals 11c of adjacent cells 11 is laminated along the second direction Y. Along the second direction Y, a length H of the first section 102 extending out of the first portion 121 meets 2 mm ≤ H ≤ 20 mm. When two adjacent cells 11 undergo relative displacement, it facilitates deformation of the electrode terminal 11c in the first direction X, the second direction Y, and the third direction Z. This is conducive to reducing the pulling force on the laminated region 101 and the sampling member 21, and reducing the risk of deformation of the laminated region 101 and the sampling member 21. H may be any one of 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or 20 mm.

In some embodiments, H meets 3 mm ≤ H ≤ 15 mm, further facilitating deformation of the electrode terminal 11c in the first direction X, the second direction Y, and the third direction Z, and further conducive to reducing the pulling force on the electrode terminal 11c.

In some embodiments, the first portion 121 surrounds an outer side surface of the electrode terminal 11c, enhancing the protection of the electrode terminal 11c and facilitating the strengthening of the strength of the electrode terminal 11c.

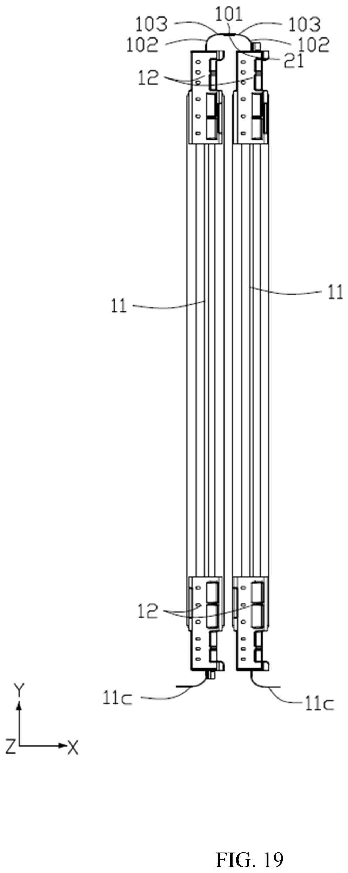

Referring to FIG. 18 and FIG. 19, in some embodiments, when the cell 11 is displaced in the first direction X, at least one of the two first sections 102 of the adjacent electrode terminals 11c deforms, so that the laminated region 101 formed by a part of the two second sections 103 and the sampling member 21 are displaced toward the body portion 111. The deformation of the electrode terminal 11c alleviates the pulling force on the laminated region 101 and the sampling member 21 due to the displacement of the cell 11 in the first direction X, reducing the risk of deformation of the laminated region 101 and the sampling member 21.

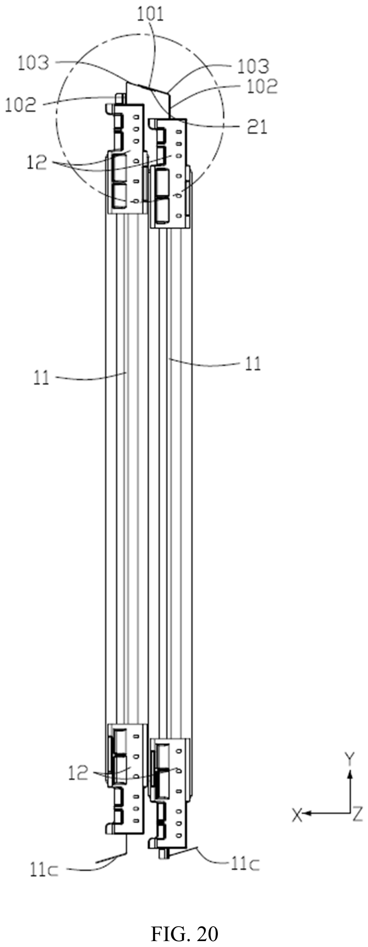

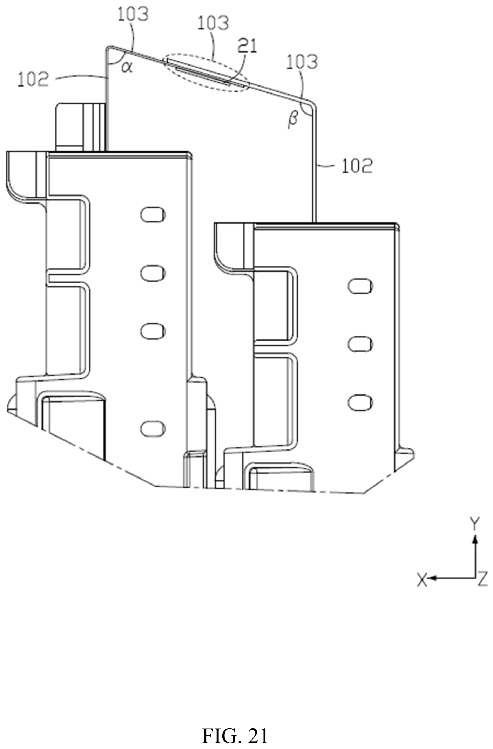

Referring to FIG. 18, FIG. 20, and FIG. 21, in some embodiments, when the cell 11 is displaced in the second direction Y, the laminated region 101 formed by a part of the two second sections 103 and the sampling member 21 is inclined relative to the body portion 111. The deformation of the electrode terminal 11c alleviates the pulling force on the laminated region 101 and the sampling member 21 due to the displacement of the cell 11 in the second direction Y, reducing the risk of deformation of the laminated region 101 and the sampling member 21.

In some embodiments, when the cell 11 is displaced in the second direction Y, the first section 102 and the second section 103 of the electrode terminal 11c of one of the cells 11 form an acute angle α, and the first section 102 and the second section 103 of the electrode terminal 11c of another cell 11 form an obtuse angle β.

In some embodiments, when the cell 11 is displaced in the second direction Y, a height of one of the cells 11 along the second direction Y is higher than that of t another cell 11, and the first section 102 of the electrode terminal 11c of the cell 11 at a higher position deforms to further alleviate the pulling force on the electrode terminal 11c due to the displacement of the cell 11 in the second direction Y.

Referring to FIG. 18, in some embodiments, when the cell 11 is displaced in the third direction Z, a non-laminated part of the first section 102 and the second section 103 of the electrode terminal 11c of one of the cells 11 partially rotates along the third direction Z, and a non-laminated part of the first section 102 and the second section 103 of the electrode terminal 11c of the other cell 11 partially rotates along a direction Z' opposite to the third direction Z. The deformation of the electrode terminal 11c alleviates the pulling force on the laminated region 101 and the sampling member 21 due to the displacement of the cell 11 in the second direction Y, reducing the risk of deformation of the laminated region 101 and the sampling member 21.

It can be understood that under conditions such as cell swelling, vibration, or dropping, the cell 11 may be displaced in one direction or in a plurality of directions.

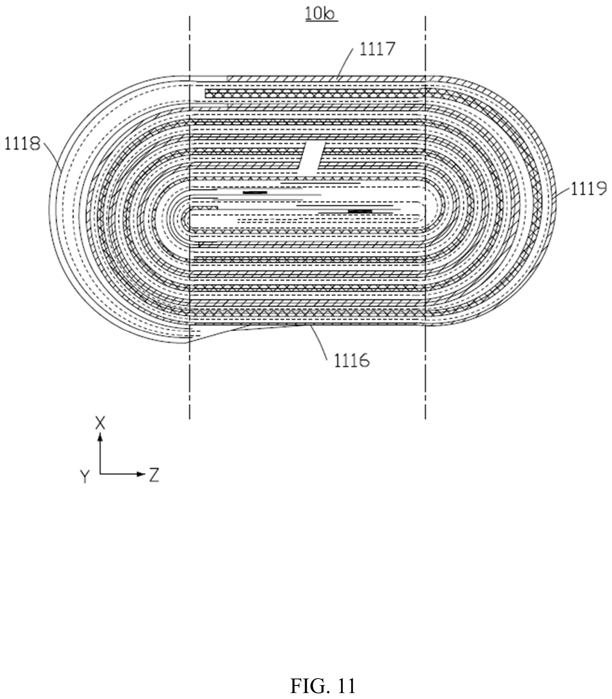

Referring to FIG. 6 and FIG. 11, in some embodiments, the electrode assembly 11b is a wound structure, and the electrode assembly 11b includes a first straight section 1116, a second straight section 1117, a first curved section 1118, and a second curved section 1119. The first straight section 1116 connects the first curved section 1118 and the second curved section 1119, and the second straight section 1117 connects the first curved section 1118 and the second curved section 1119. Along the first direction X, a projection of the third wall 111c covers a projection of the first straight section 1116 overlaps with, a projection of the fourth wall 111d covers a projection of the first straight section 1116, a projection of the third wall 111c covers a projection of the second straight section 1117, and a projection of the fourth wall 111d covers a projection of the second straight section 1117, which is conducive to evenly applying pressure between the cells 11, further improving the service life of the cell 11.

In some embodiments, the first sealing portion 112 includes a first bent portion 112b and a second bent portion 112c. The first bent portion 112b and the second bent portion 112c are opposite to each other along the third direction Z, and the first bent portion 112b is connected to the second bent portion 112c through the first connection portion 112a.

In some embodiments, when viewed along a direction Y' opposite to the second direction Y, in the first direction X, the first portion 121 does not exceed the third wall 111c, and the first portion 121 does not exceed the fourth wall 111d. When the body portions 111 of adjacent cells 11 apply pressure to each other, the force on the first sealing portion 112 can be reduced, enhancing the protection of the first sealing portion 112.

In some embodiments, the bracket 12 includes a first side portion 122 and a second side portion 123, one end of the first portion 121 is connected to the first side portion 122, and another is connected to the second side portion 123, which can increase the structural strength of the bracket 12. The first side portion 122 covers the first bent portion 112b, and the second side portion 123 covers the second bent portion 112c, providing protection for the first sealing portion 112.

In some embodiments, when viewed along a direction Y' opposite to the second direction Y, in the first direction X, the first side portion 122 is located between the third wall 111c and the fourth wall 111d. When the body portions 111 of adjacent cells 11 apply pressure to each other, the force on the first sealing portion 112 can be reduced, enhancing the protection of the first sealing portion 112.

In some embodiments, when viewed along a direction Y' opposite to the second direction Y, in the first direction X, the second side portion 123 is located between the third wall 111c and the fourth wall 111d. When the body portions 111 of adjacent cells 11 apply pressure to each other, the force on the first sealing portion 112 can be reduced, enhancing the protection of the first sealing portion 112.

In some embodiments, along the second direction Y, a projection of the first side portion 122 overlaps with a projection of the first curved section 1118, the projection of the first side portion 122 and a projection of the first straight section 1116 spaced apart from each other, and the projection of the first side portion 122 and a projection of the second straight section 1117 are spaced apart from each other, which is conducive to pressure relief.

In some embodiments, along the second direction Y, a projection of the second side portion 123 overlaps with a projection of the second curved section 1119, the projection of the second side portion 123 and a projection of the first straight section 1116 are spaced apart from each other, and the projection of the second side portion 123 and a projection of the second straight section 1117 are spaced apart from each other, which is conducive to pressure relief.

In some embodiments, the bracket 12 includes a second connection portion 124, the second connection portion 124 covering at least a part of the first wall 111a. One end of the second connection portion 124 is connected to the first side portion 122, and another end is connected to the second side portion 123, which can further enhance the structural strength of the bracket 12. When viewed along a direction Y' opposite to the second direction Y, in the first direction X, the second connection portion 124 does not exceed the third wall 111c, and the second connection portion 124 does not exceed the fourth wall 111d.

The body portions 111 of adjacent cells 11 can be in direct contact, and adjacent cells 11 apply pressure to each other through the body portions 111, which can reduce the force on the first sealing portion 112, enhance the protection of the first sealing portion 112, reduce the need for buffer members between adjacent cells 11 to provide swelling space for the cell 11, reduce the occupied space, and thus increase the energy density of the battery module 100.

In some embodiments, there is pressure between adjacent cell housings 11a, improving the performance of the cell 11.

In some embodiments, the bracket 12 includes a first extension portion 125, the first extension portion 125 extending from the first side portion 122. The first extension portion 125 can protect the fifth wall 111e and the second sealing portion 113, enhancing the connection strength between the bracket 12 and the cell 11.

Optionally, in the second direction Y, a part of the fifth wall 111e and a part of the second sealing portion 113 each are provided with the first extension portion 125, which can protect a part of the body portion 111 and a part of the second sealing portion 113, enhance the connection strength between the bracket 12 and the cell 11, and facilitate the integral formation of the bracket 12 on the cell 11.

Optionally, in the second direction Y, the entire fifth wall 111e and the entire second sealing portion 113 each are provided with the first extension portion 125, which can better protect the body portion 111 and the second sealing portion 113 and better enhance the connection strength between the bracket 12 and the cell 11.

In some embodiments, when viewed along a direction Y' opposite to the second direction Y, in the first direction X, the first side portion 122 does not exceed the first extension portion 125, and a first gap 122a is formed between adjacent first side portions 122. When adjacent body portions 111 are in direct contact and apply pressure to each other, the force on the first side portion 122 can be reduced, thereby reducing the force on the first sealing portion 112, which is conducive to protecting the first sealing portion 112. The first gap 122a also facilitates heat dissipation of the cell 11.

In some embodiments, the bracket 12 includes a second extension portion 126, the second extension portion 126 extending from the second side portion 123. The second extension portion 126 can protect the sixth wall 111f and the other second sealing portion 113, enhancing the connection strength between the bracket 12 and the cell 11, and facilitating the integral formation of the bracket 12 on the cell 11.

Optionally, in the second direction Y, a part of the sixth wall 111f and a part of the other second sealing portion 113 each are provided with the second extension portion 126, which can protect a part of the body portion 111 and a part of the second sealing portion 113, enhance the connection strength between the bracket 12 and the cell 11, and facilitate the integral formation of the bracket 12 on the cell 11.

Optionally, in the second direction Y, the entire sixth wall 111f and the entire the other second sealing portion 113 each are provided with the second extension portion 126, which can better protect the body portion 111 and the second sealing portion 113 and better enhance the connection strength between the bracket 12 and the cell 11.

In some embodiments, when viewed along a direction Y' opposite to the second direction Y, in the first direction X, the second side portion 123 does not exceed the second extension portion 126, and a second gap 123a is formed between adjacent second side portions 123. When adjacent body portions 111 are in direct contact and apply pressure to each other, the second gap 123a can reduce the force on the second side portion 123, thereby further reducing the force on the first sealing portion 112, further facilitating the protection of the first sealing portion 112. The second gap 123a also facilitates heat dissipation of the cell 11.

In some embodiments, when viewed along the first direction X, in the second direction Y, a part of the first connection portion 112a is located between the body portion 111 and the first portion 121, and in the third direction Z, a part of the first connection portion 112a is located between the first side portion 122 and the second side portion 123. By covering a part of the first connection portion 112a with the bracket 12, the protection of the first sealing portion 112 is increased. By disposing a part of the first connection portion 112a between the body portion 111 and the first portion 121 and between the first side portion 122 and the second side portion 123, swelling space can be provided for the first sealing portion 112, which is conducive to pressure relief, reduces the impact of the pressure inside the cell 11 on the first connection portion 112a, reduces the impact on the sealing performance of the first sealing portion 112, and facilitates heat dissipation of the first sealing portion 112.

In some embodiments, the cell 11 includes an electrolyte, where the electrolyte is provided in the cell housing 11a. The electrode assembly 11b includes a first electrode plate, a separator, and a second electrode plate, the electrode assembly is formed by winding or stacking the first electrode plate, the separator, and the second electrode plate. A part of the electrolyte infiltrates the first electrode plate, the separator, and the second electrode plate for transferring electrical ions, and a part of the electrolyte is attached to a surface of the cell housing 11a and/or a surface of the electrode assembly 11b in a free state, where the electrolyte in the free state is a free electrolyte. During the cycling process of a plurality of cells 11, the free electrolyte inside the cell 11 is squeezed.

In this application, by having a part of the first connection portion 112a located between the body portion 111 and the first portion 121 in the second direction Y, and a part of the first connection portion 112a located between the first side portion 122 and the second side portion 123 in the third direction Z, swelling space is provided for the first sealing portion 112, reducing the impact of swelling of the cell 11 on the sealing performance of the first sealing portion 112.

In some embodiments, the bracket 12 includes a third connection portion 128, the third connection portion 128 is connected to a second portion 127, and the third connection portion 128 is connected to the first portion 121. Along the first direction X, the third connection portion 128 is located between adjacent electrode terminals 11c, and a projection of the third connection portion 128 overlaps with a projection of the electrode terminal 11c. The third connection portion 128 is connected to a part of the electrode terminal 11c extending out of the cell housing 11a. Along the first direction X, the third connection portion 128 can support the electrode terminal 11c extending out of the first connection portion 112a, which is conducive to the bending and connection of the electrode terminals 11c of two adjacent cells 11.

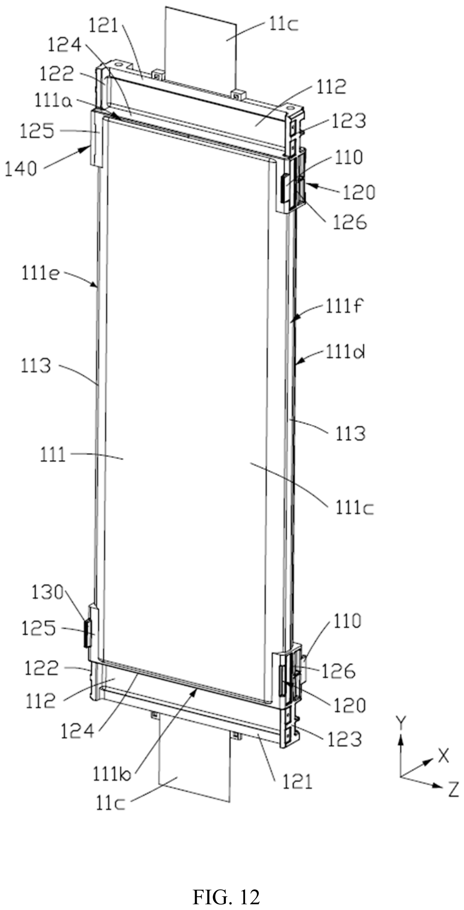

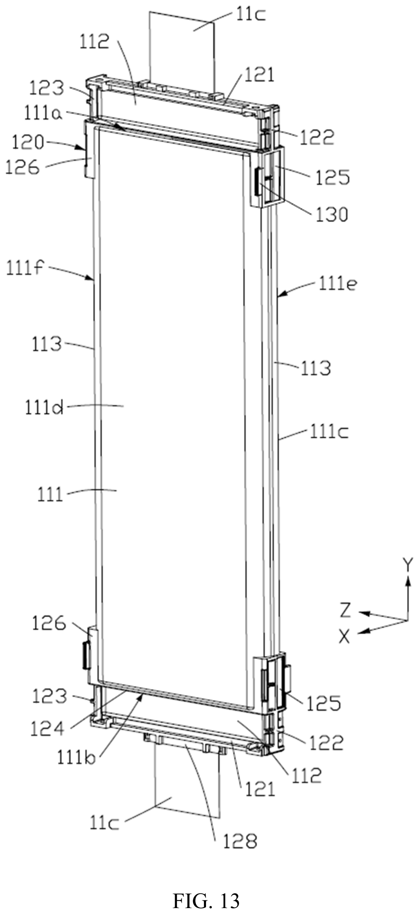

Referring to FIG. 12 and FIG. 13, in some embodiments, along the first direction X, the bracket 12 includes a first protrusion 110 and a third recess 120, the third recess 120 is disposed at the second extension portion 126, and the first protrusion 110 extending from the second extension portion 126. When the body portions 111 of adjacent cells 11 are in direct contact, the first protrusion 110 is disposed in the third recess 120 of an adjacent bracket 12, and a gap exists between the first protrusion 110 and the third recess 120. Adjacent brackets 12 are positioned via the third recess 120 and the first protrusion 110, reducing displacement of adjacent body portions 111 and helping a plurality of body portions 111 to apply pressure to each other. The gap between the first protrusion 110 and the third recess 120 can reduce the stress on the bracket 12, improve the protection for the first sealing portion 112, and enhance the connection strength between the bracket 12 and the cell 11.

In some embodiments, along the first direction X, the bracket 12 includes a second protrusion 130 and a fourth recess 140, the fourth recess 140 is disposed at the first extension portion 125, and the second protrusion 130 extending from the first extension portion 125. When body portions of adjacent cells 11 are in direct contact with each other, the second protrusion 130 is provided in a fourth recess 140 of an adjacent bracket 12. A gap exists between the second protrusion 130 and the fourth recess 140. Adjacent brackets 12 are further positioned via the fourth recess 140 and the second protrusion 130, further reducing displacement of adjacent body portions 111 and further helping a plurality of body portions 111 to apply pressure to each other. The gap between the second protrusion 130 and the fourth recess 140 can reduce the stress on the bracket 12, further improve the protection for the first sealing portion 112, and further enhance the connection strength between the bracket 12 and the cell 11.

In some embodiments, the cell unit 10 includes two brackets 12, where one of the brackets 12 is connected to a part of one first sealing portion 112, and the other bracket 12 is connected to a part of another first sealing portion 112. One of the electrode terminals 11c extends out of one first sealing portion 112 and the bracket 12 along the second direction Y, and the other electrode terminal 11c extends out of the other first sealing portion 112 and the bracket 12 along a direction opposite to the second direction Y.

In some embodiments, the two brackets 12 included in the cell unit 10 have the same structure.

In some embodiments, the battery module includes two collection assemblies 20, each collection assembly 20 including a wire 22 and a sampling member 21, and the body portion 111 including two first sealing portions 112. The two first sealing portions 112 are arranged along the second direction Y. The cell 11 includes two electrode terminals 11c. One of the sampling members 21 connects the interconnected electrode terminals 11c of two adjacent cells 11 extending out of the first sealing portion 112 along the second direction Y. Another sampling member 21 connects the interconnected electrode terminals 11c of two adjacent cells 11 extending out of another first sealing portion 112 along a direction opposite to the second direction Y.

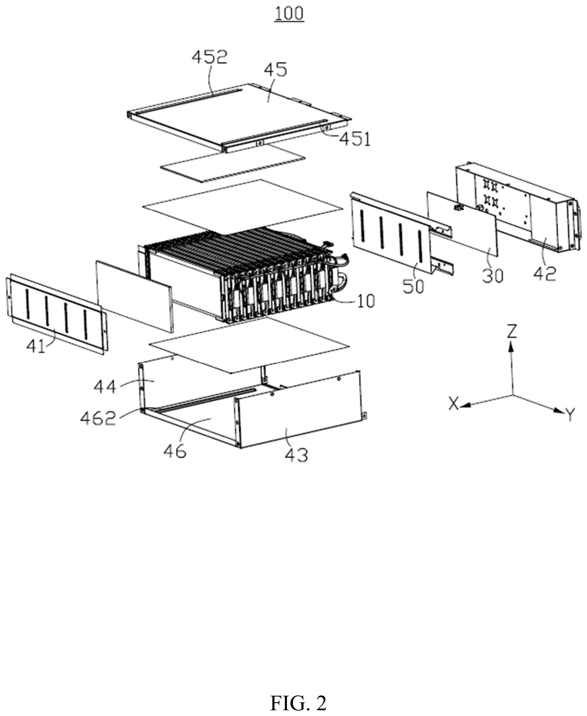

Referring to FIG. 2 to FIG. 5, in some embodiments, when the cell 11 includes two electrode terminals 11c, where one of the electrode terminals 11c extends out of the cell housing 11a from one of the first sealing portions 112, and the other electrode terminal 11c extends out of the cell housing 11a from the other first sealing portion 112. The sampling member 21 has two, where one of the sampling members 21 connects the interconnected electrode terminals 11c of two adjacent cells 11 on one side, and the other sampling member 21 connects the interconnected electrode terminals 11c of two adjacent cells 11 on the other side.

Referring to FIG. 2, in some embodiments, the battery module 100 includes a circuit board 30, and the cell unit 10 and the circuit board 30 are arranged along the first direction X. The circuit board 30 is connected to the wire 22 and can receive data collected by the sampling members 21. The circuit board 30 includes a BMS (Battery Management System) assembly. The BMS assembly includes a plurality of electronic components, and the plurality of electronic components can implement functions such as control, protection, communication, electrical quantity calculation, signal transmission, and electrical energy transmission for the cells 11. Optionally, the circuit board 30 includes a flexible circuit board (FPC, Flexible Printed Circuit). Optionally, the circuit board 30 includes a printed circuit board (PCB, Printed Circuit Board), and the circuit board 30 is provided with a plurality of wires (not shown in the figures).

Referring to FIG. 1 and FIG. 2, in some embodiments, the battery module 100 further includes a casing 40, the casing 40 including a rear wall 41, a front wall 42, a first sidewall 43, a second sidewall 44, a top wall 45, and a bottom wall 46. The front wall 42 and the rear wall 41 are arranged along the first direction X, the second sidewall 44 and the first sidewall 43 are arranged along the second direction Y, and the bottom wall 46 and the top wall 45 are arranged along the third direction Z. The rear wall 41 connects the first sidewall 43, the second sidewall 44, the top wall 45, and the bottom wall 46, the rear wall 41 connects the first sidewall 43, the second sidewall 44, the top wall 45, and the bottom wall 46, forming an accommodation space, and the cell unit 10 is disposed in the accommodation space.

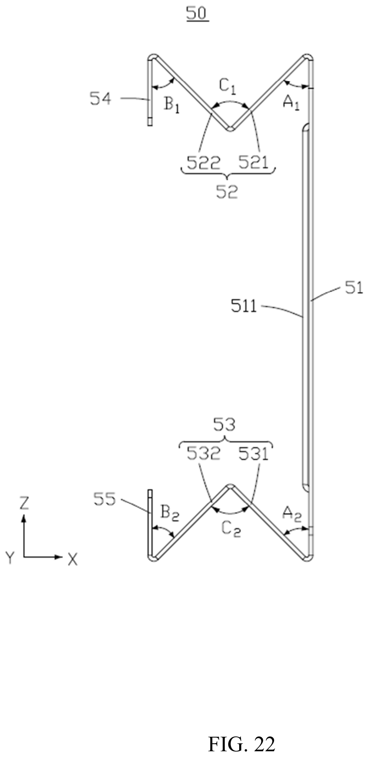

Referring to FIG. 2 and FIG. 22, in some embodiments, the battery module 100 further includes an elastic member 50. The elastic member 50 is disposed between the cell unit 10 and the casing 40, and the elastic member 50 is fixedly connected to the casing 40, which can apply pressure to the cell 11 and provide swelling space. Optionally, the elastic member 50 is disposed between the cell unit 10 and the rear wall 41. Optionally, the elastic member 50 is disposed between the cell unit 10 and the front wall 42. Optionally, the battery module 100 includes two elastic members 50, where one of the elastic members 50 is disposed between the cell unit 10 and the rear wall 41, and the other elastic member 50 is disposed between the cell unit 10 and the front wall 42.

In some embodiments, the elastic member 50 includes a base portion 51, a third bent portion 52, and a fourth bent portion 53, the fourth bent portion 53 and the third bent portion 52 is disposed along the third direction Z. The third bent portion 52 is connected to the fourth bent portion 53 through the base portion 51. The base portion 51 is configured to provide pressure to the cell unit 10, the pressure of the third bent portion 52 and the fourth bent portion 53 acts on the plurality of cell units 10 through the base portion 51, and the third bent portion 52 and the fourth bent portion 53 are configured to provide swelling space for the cell unit 10. When the cell 11 swells, the third bent portion 52 and the fourth bent portion 53 contract.

In some embodiments, the third bent portion 52 is fixedly connected to the first sidewall 43 and the second sidewall 44, and the fourth bent portion 53 is fixedly connected to the bottom wall 46.

In some embodiments, the third bent portion 52 is fixedly connected to the top wall 45 and the bottom wall 46, and the fourth bent portion 53 is fixedly connected to the top wall 45 and the bottom wall 46.

In some embodiments, when the cell 11 does not swell, the elastic member 50 does not apply pressure to the cell unit 10, and the elastic member 50 is connected to the cell 11. When the cell 11 swells, the cell 11 compresses the elastic member 50, and the elastic member 50 provides pressure to the cell 11.

In some embodiments, when the cell 11 does not swell, the elastic member 50 applies pressure to the cell 11. When the cell 11 swells, the cell 11 compresses the elastic member 50 such that the elastic member 50 applies a higher pressure to the cell 11.

In some embodiments, the base portion 51 is connected to a body portion 111 of an outermost cell 11. The base portion 51 is provided with a plurality of protrusions 511 spaced apart along the first direction X, the protrusion 511 is formed by a side of the base portion 51, recessed away from the body portion 111, the side of the base portion 51 being a side facing away the body portion 111, which can enhance the structural strength of the base portion 51, and reduce the risk of deformation of the base portion 51 due to uneven force.

In some embodiments, the elastic member 50 includes a first connection section 54, the first connection section 54 connecting a side of the third bent portion 52, the side of the third bent portion 52 being a side facing away from the base portion 51, the first connection section 54 is fixedly connected to the casing 40, and the third bent portion 52 is fixedly connected to the casing 40 through the first connection section 54, which can transfer the force received by the third bent portion 52 to the casing 40. For example, the third bent portion 52 is fixed to the casing 40 by welding, adhesion, abutment, clamping, or a screw.

In some embodiments, the first connection section 54 is parallel to the base portion 51, which is conducive to deformation of the elastic member 50 in the first direction X.

In some embodiments, the elastic member 50 includes a second connection section 55, the second connection section 55 connecting a side of the fourth bent portion 53 , the side of the fourth bent portion 53 being facing away from the base portion 51, the second connection section 55 is fixedly connected to the casing 40, and the fourth bent portion 53 is fixedly connected to the casing 40 through the second connection section 55, which can transfer the force received by the fourth bent portion 53 to the casing 40. For example, the fourth bent portion 53 is fixed to the casing 40 by welding, adhesion, abutment, clamping, or a screw.

In some embodiments, the second connection section 55 is parallel to the base portion 51, which is conducive to deformation of the elastic member 50 in the first direction X.

In some embodiments, the first sidewall 43 is provided with a first fixed portion 431, along the first direction X, a projection of the first connection section 54 overlaps with a projection of the first fixed portion 431, and the first connection section 54 is fixed to the first fixed portion 431.

In some embodiments, the second sidewall 44 is provided with a second fixed portion 441, along the first direction X, a projection of the first connection section 54 overlaps with a projection of the second fixed portion 441, and the first connection section 54 is fixed to the second fixed portion 441.

In some embodiments, the first fixed portion 431 is closer to the cell unit 10 than the first connection section 54, facilitating the fixation of the first fixed portion 431 and the first connection section 54.

In some embodiments, the second fixed portion 441 is closer to the cell unit 10 than the first connection section 54, facilitating the fixation of the second fixed portion 441 and the first connection section 54.

In some embodiments, a structural strength of the first sidewall 43 is greater than a structural strength of the elastic member 50, reducing the risk of deformation of the first sidewall 43 due to the force received by the third bent portion 52.

In some embodiments, a structural strength of the second sidewall 44 is greater than the structural strength of the elastic member 50, reducing the risk of deformation of the second sidewall 44 due to the force received by the third bent portion 52.

In some embodiments, a thickness of the first sidewall 43 is greater than a maximum thickness among the base portion 51, the third bent portion 52, and the first connection section 54, enhancing the structural strength of the first sidewall 43, and reducing the risk of deformation of the first sidewall 43 due to the force received by the third bent portion 52.

In some embodiments, a thickness of the second sidewall 44 is greater than the maximum thickness among the base portion 51, the third bent portion 52, and the first connection section 54, enhancing the structural strength of the second sidewall 44, and reducing the risk of deformation of the second sidewall 44 due to the force received by the third bent portion 52.

In some embodiments, the bottom wall 46 is provided with a third fixed portion 46a, along the first direction X, a projection of the bottom wall 46 overlaps with a projection of the third fixed portion 46a, and the second connection section 55 is fixed to the third fixed portion 46a. For example, the second connection section 55 is fixed to the third fixed portion 46a by welding, adhesion, abutment, clamping, or a screw.

In some embodiments, the third fixed portion 46a is closer to the cell unit 10 than the second connection section 55, facilitating the fixation of the third fixed portion 46a with the second connection section 55.

In some embodiments, a structural strength of the bottom wall 46 is greater than the structural strength of the elastic member 50, reducing the risk of deformation of the bottom wall 46 due to the force received by the third bent portion 52.

In some embodiments, a thickness of the bottom wall 46 is greater than the maximum thickness among the base portion 51, the fourth bent portion 53, and the second connection section 55, enhancing the structural strength of the bottom wall 46, and reducing the risk of deformation of the bottom wall 46 due to the force received by the fourth bent portion 53.

In some embodiments, the third bent portion 52 includes a first bent section 521 and a second bent section 522, the first bent section 521 is connected to the base portion 51, and the second bent section 522 connecting the first bent section 521 and the first connection section 54. The first bent section 521 and the base portion 51 form a first included angle A₁, the second bent section 522 and the first connection section 54 form a second included angle B₁, and the first bent section 521 and the second bent section 522 form a third included angle C₁, where A₁ ≥ B₁, which is conducive to increasing the deformation resistance of the first bent section 521, and reducing the risk of deformation of the elastic member 50 in the first direction X.

In some embodiments, C₁ > A₁, which is conducive to improving uniform deformation of the third bent portion 52.

In some embodiments, C₁ = 2B₁ = 2A₁, which is conducive to further improving uniform deformation of the third bent portion 52.

In some embodiments, the fourth bent portion 53 includes a third bent section 531 and a fourth bent section 532, the third bent section 531 is connected to the base portion 51, and the fourth bent section 532 connecting the third bent section 531 and the second connection section 55. The third bent section 531 and the base portion 51 form a first included angle A₂, the fourth bent section 532 and the second connection section 55 form a second included angle B₂, and the third bent section 531 and the fourth bent section 532 form a third included angle C₂. A₂ ≥ B₂, which is conducive to increasing the deformation resistance of the third bent section 531, and reducing the risk of deformation of the elastic member 50 in the first direction X.

In some embodiments, C₂ > A₂, which is conducive to improving uniform deformation of the fourth bent portion 53.

In some embodiments, C₂ = 2B₂; = 2A₂, which is conducive to further improving uniform deformation of the fourth bent portion 53.

Optionally, the fourth bent portion 53 is set to have the same angle as the third bent portion 52. When the third bent portion 52 and the fourth bent portion 53 are subjected to force, they can be uniformly stressed and uniformly deformed, reducing the risk of rotation of the elastic member 50 due to uneven deformation. Optionally, A₁ = A₂, B₁ = B₂, C₁ = C₂.

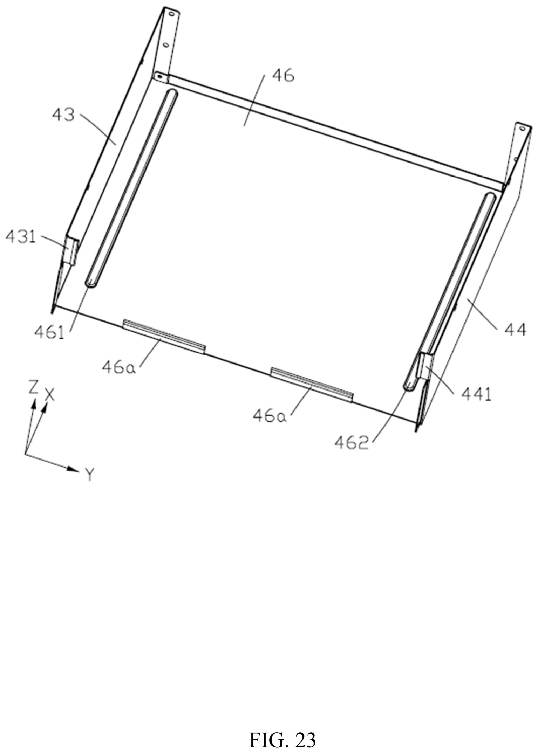

Referring to FIG. 2 and FIG. 23, in some embodiments, the bottom wall 46 is provided with a first limiting portion 461 and a second limiting portion 462, the first limiting portion 461 extending along the first direction X, and the second limiting portion 462 extending along the first direction X. The second limiting portion 462 and the first limiting portion 461 are arranged along the second direction Y. The first limiting portion 461 and the second limiting portion 462 protrude from a surface of the bottom wall 46 opposite to the top wall 45 along a direction opposite to the third direction Z. When the bracket 12 is disposed in the casing 40, the bracket 12 is located between the first limiting portion 461 and the second limiting portion 462. The first limiting portion 461 and the second limiting portion 462 guide the movement of the cell unit 10. The first limiting portion 461 and the second limiting portion 462 can restrict the movement of the bracket 12 along the second direction Y, which is conducive to the movement of the bracket along the first direction X.

Referring to FIG. 2, in some embodiments, the top wall 45 is provided with a third limiting portion 451 and a fourth limiting portion 452, the third limiting portion 451 extending along the first direction X, and the fourth limiting portion 452 extending along the first direction X. The fourth limiting portion 452 and the third limiting portion 451 are arranged along the second direction Y. The first limiting portion 461 and the third limiting portion 451 are disposed along the third direction Z, and the second limiting portion 462 and the fourth limiting portion 452 are disposed along the third direction Z. The third limiting portion 451 and the fourth limiting portion 452 protrude from a surface of the top wall 45 opposite to the bottom wall 46 along the third direction Z. When the bracket 12 is disposed in the casing 40, the bracket 12 is located between the third limiting portion 451 and the fourth limiting portion 452. The third limiting portion 451 and the fourth limiting portion 452 further guide the movement of the cell unit 10. When the cell 11 swells, the third limiting portion 451 and the fourth limiting portion 452 can restrict the movement of the bracket 12 along the second direction Y, which is conducive to the movement of the bracket 12 along the first direction X.

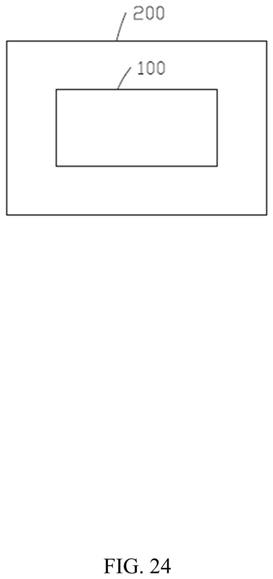

Referring to FIG. 24, this application further provides an electric device 200 using the foregoing battery module 100. In an embodiment, the electric device 200 in this application may be, but is not limited to, an electronic device, a drone, a backup power source, an electric vehicle, an electric motorcycle, an electric bicycle, an electric tool, or a large household battery module.

Those of ordinary skill in the art should appreciate that some foregoing embodiments are for description of this application only but not for limiting this application. Appropriate modifications and variations made to some foregoing embodiments without departing from the essential spirit and scope of this application all fall within the scope of this application.

## Claims

1. A battery module comprising:
a plurality of cell units arranged along a first direction, wherein each of the cell units comprises a cell and a bracket; the cell comprises an electrode assembly, a cell housing, and an electrode terminal; and the electrode terminal is connected to the electrode assembly and led out of the cell housing;
the cell housing comprises a body portion and a first sealing portion, and the electrode assembly is disposed at the body portion;
the first sealing portion comprises a first connection portion, and the electrode terminal extends out of the cell housing from the first connection portion;
the bracket comprises a first portion, the first portion covering a part of the first connection portion, and the electrode terminal extending out of the first portion; and
a collection assembly comprising a plurality of sampling members; wherein
at least two electrode terminals and one sampling member are laminated and connected.

2. The battery module according to claim 1, wherein the collection assembly comprises a wire, the wire connecting each of the sampling members.

3. The battery module according to claim 2, wherein the one sampling member is welded to or crimped to at least one of the at least two electrode terminals.

4. The battery module according to any one of claims 1 to 3, wherein electrode terminals of two adjacent cells extending out of the first portion are laminated and connected to form a laminated region, the body portion and the first portion are arranged along a second direction; and
along the second direction, a projection of the sampling member is located within a projection of the laminated region, and the second direction is perpendicular to the first direction.

5. The battery module according to claim 4, wherein along the second direction, the sampling member is closer to the cell housing than the sampling member from the laminated region.

6. The battery module according to any one of claims 1 to 5, wherein a part of the electrode terminal extending out of the first portion comprises a first section and a second section, the first sections of the electrode terminals of adjacent cells are spaced apart along the first direction, the second sections of the electrode terminals of adjacent cells are laminated along the second direction; and along the second direction, a length H of the first section extending out of the first portion meets 2 mm ≤ H ≤ 20 mm.

7. The battery module according to claim 6, wherein the first sealing portion comprises a first bent portion and a second bent portion, the first bent portion is connected to the second bent portion through the first connection portion;
the bracket comprises a first side portion covering the first bent portion and a second side portion covering the second bent portion, the first side portion and the second side portion are arranged along a third direction; and
the first direction, the second direction, and the third direction are perpendicular to each other.

8. The battery module according to claim 7, wherein when viewed along the first direction, in the second direction, a part of the first connection portion is located between the body portion and the first portion, and in the third direction, a part of the first connection portion is located between the first side portion and the second side portion.

9. The battery module according to any one of claims 1 to 8, wherein there is pressure between adjacent cell housings.

10. The battery module according to any one of claims 1 to 9, wherein the body portions of adjacent cells are in direct contact.

11. The battery module according to any one of claims 1 to 10, wherein the cell housing comprises a first wall, a second wall, a third wall, and a fourth wall; wherein the second wall is opposite to the first wall along a second direction, and along the first direction, the third wall is opposite to the fourth wall; and
when viewed along a direction opposite to the second direction, in the first direction, the first portion does not exceed the third wall, and the first portion does not exceed the fourth wall.

12. The battery module according to claim 11, wherein the electrode assembly is a wound structure; the electrode assembly comprises a first straight section, a second straight section, a first curved section, and a second curved section; wherein the first straight section connects the first curved section and the second curved section, and the second straight section connects the first curved section and the second curved section; and
along the first direction, a projection of the third wall covers a projection of the first straight section, and a projection of the fourth wall covers a projection of the second straight section.

13. The battery module according to any one of claims 1 to 12, wherein the bracket is integrally formed on the cell.

14. The battery module according to any one of claims 1 to 13, wherein the bracket is an insulating bracket.

15. The battery module according to any one of claims 1 to 14, wherein the first portion is disposed around at least a part of the electrode terminal.

16. The battery module according to claim 2, wherein the sampling member is configured to displace with deformation of the electrode terminal, and a part of the wire is configured to move with the sampling member.

17. An electric device comprising the battery module according to any one of claims 1 to 16.
